# EUROPEAN PATENT APPLICATION

(11) **EP 2 193 908 A2**
(43) Date of publication of application: **09.06.2010**
(21) Application number: 09007337.0
(22) Date of filing: 03.06.2009
(51) Int. Cl.: B29C 65/02, B32B 27/40, B29K 75/00, B29L 22/02, B29L 31/48, B29L 31/52, B29L 31/54, B29K 105/04, A63B 45/00, A41D 13/00

(54) **Sporting article and method of making the same**

(30) Priority: 05.12.2008 TW 97147504
(71) Applicant: Lin, Keng-Hsien, Hsiao-Kang Dist., Kaohsiung City (TW)
(72) Inventor: Lin, Keng-Hsien, Hsiao-Kang Dist., Kaohsiung City (TW)
(74) Representative: Kampfenkel, Klaus

(57) **Abstract**

A method of making a sporting article includes: providing a plurality of sheet segments (41) each of which is made of a multi-layered material that includes a thermoplastic foamed layer (412), and a thermoplastic non-foamed layer (411) laminated on the foamed layer (412), each of the sheet segments (41) having at least one connection end (410); and assembling the sheet segments (41) to form the sporting article by heat-sealing the connection ends (410) of the sheet segments (41), thereby forming heat-sealed seams (42) in the sporting article.

## Description

This invention relates to a sporting article and a method of making the same, more particularly to a sporting article formed with heat-sealed seams.

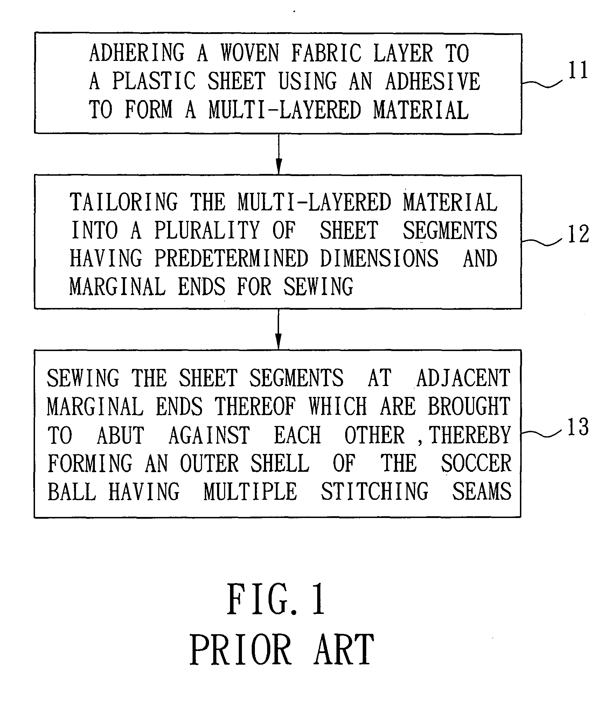

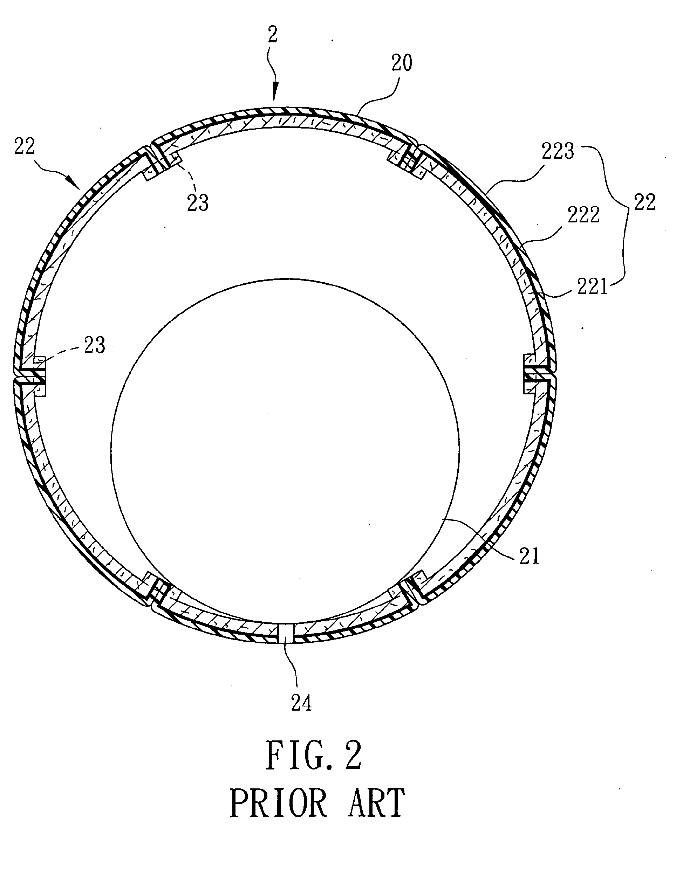

Referring to Fig. 1 and 2, a method of making a conventional sporting article, for example, a soccerball 2, includes: step 11 of adhering a woven fabric layer 221 to a plastic sheet 223 using an adhesive 222 to form a multi-layered material; step 12 of tailoring the multi-layered material into a plurality of sheet segments 22 having predetermined dimensions and marginal ends for sewing; and step 13 of sewing the sheet segments 22 at adjacent marginal ends thereof which are brought to abut against each other, thereby forming an outer shell 20 of the soccer ball 2 having multiple stitching seams 23.

As shown in Figure 2, the soccer ball 2 has an interior air bladder 21 disposed inside the outer shell 20. An inflating hole 24 extends through the outer shell 20 and is connected fluidly to the interior air bladder 21. Normally, the woven fabric layer 221 is made of synthetic fiber yarns and cotton yarns, and polyethylene is used to make the plastic sheet 223.

However, the conventional method of making the soccer ball or the like has the following drawbacks:
1. Since the soccer ball is made of the woven fabrics, there is a need to separate the woven fabric from the plastic sheet, thereby resulting in high recycling cost.
2. The adhesive layer 222 usually contains a large amount of solvent that is generally volatile and harmful to health of operators working for manufacturing soccer balls.

Therefore, an object of the present invention is to provide a sporting article and a method of making the same that can overcome the aforesaid drawbacks associated with the prior art.
According to one aspect of the present invention, there is provided a method of making a sporting article, comprising: providing a plurality of sheet segments each of which is made of a multi-layered material that includes a thermoplastic foamed layer, and a thermoplastic non-foamed layer laminated on the foamed layer, each of the sheet segments having at least one connection end; and assembling the sheet segments to form the sporting article by heat-sealing the connection ends of the sheet segments, thereby forming heat-sealed seams in the sporting article.

According to another aspect of the present invention, there is provided a sporting article made according to the aforesaid method, which comprises: a plurality of sheet segments made of a multi-layered material that includes a thermoplastic foamed layer, and a thermoplastic non-foamed layer laminated on the foamed layer; and heat-sealed seams where the sheet segments are interconnected to form the sporting article.

Other features and advantages of the present invention will become apparent in the following detailed description of the preferred embodiments of the invention, with reference to the accompanying drawings, in which:
Fig. 1 is a flow chart showing a method of making a conventional soccer ball;
Fig. 2 is a cross-sectional view of a conventional soccer ball;
Fig. 3 is a flow chart showing a method of making a sporting article according to the present invention;
Fig. 4 is a schematic diagram illustrating how a multi-layered material is prepared by means of a roller system;
Fig. 5 is a fragmentary schematic view illustrating the step of assembling the sheet segments for the sporting article of the present invention;
Fig. 6 is a fragmentary schematic view illustrating the connection ends of the sheet segments for the sporting article of the first embodiment of the present invention;
Fig. 7 is a fragmentary schematic view illustrating beveled edge faces of two sheet segments for the sporting article of the second embodiment of the present invention; and
Fig. 8 is a cross-sectional view illustrating the constructionofaball according to the present invention.

Before the present invention is described in greater detail with reference to the accompanying preferred embodiments, it should be noted herein that like elements are denoted by the same reference numerals throughout the disclosure.

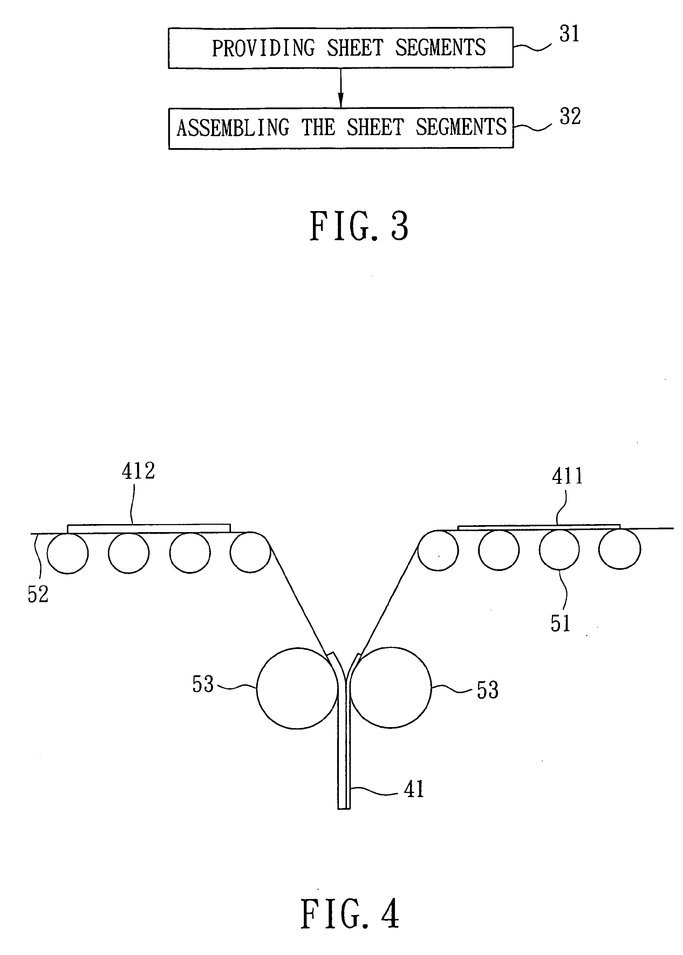

Referring to Figs. 3 to 6, the first preferred embodiment of the method of making a sporting article according to the present invention comprises step 31 of providing sheet segments 41, and step 32 of assembling the sheet segments 41.

In step 31, a plurality of the sheet segments 41 are provided. Each of the sheet segments 41 is made of a multi-layered material that includes a thermoplastic foamed layer 412, and a thermoplastic non-foamed layer 411 laminated on the foamed layer 412. The sheet segments 41 may be provided by first forming the multi-layered material from the foamed layer 4 12 and the non-foamed layer 411 followed by tailoring the multi-layered material, or by first forming segments of the foamed layer 412 and the non-foamed layer 411 followed by laminating the segments of the foamed layers 412 with the segments of the non-foamed layers 411, respectively.

In this embodiment, the non-foamed layer 411 is made from a non-foamed thermoplastic polyurethane (TPU) sheet, and the foamed layer 412 is made from a foamed thermoplasticpolyurethane (TPU) sheet. The non-foamed TPU layer 411 has a smooth surface, whereas the foamed TPU layer 412 is porous. Preferably, the density of the foamed TPU layers 412 ranges from 0.1 to 0.8 g/cm³. To form the multi-layered material, the foamed TPU layer 412 may be melt bonded to the non-foamed TPU layer 411.
As shown in Fig. 4, segments of the foamed layers 412 and the non-foamed layer 411 are fed to a pair of heating rollers 53 where the foamed layers 412 are melt bonded to the respective non-foamed layers 411 to form the sheet segments 41. Preferably, the melt bonding of the foamed layer 412 and the non-foamed layer 411 is conducted at a temperature ranging from 8 0--2 60 "C for at least 3 seconds.

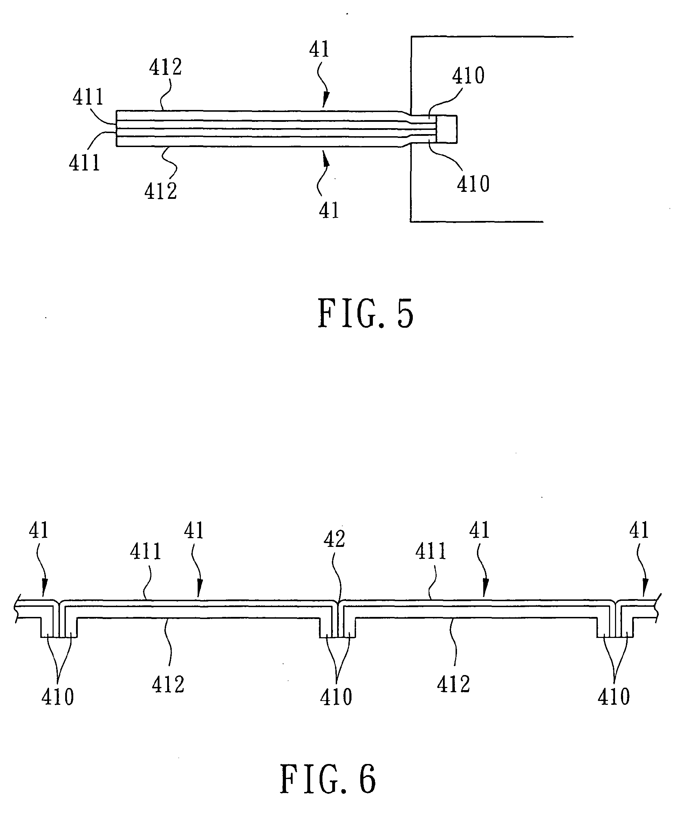

In step 32, the sheet segments 41 are assembled together by heat-sealing to form the sporting article. Referring to Fig. 6, each of the sheet segments 41 has two opposite connection ends 410, one of which is heat-sealed to the connection end 410 of the adjacent sheet segment 41 at one side, and the other one of which is heat-sealed to the connection end 410 of the other adjacent sheet segment 41 at the other side. Referring to Fig. 5, during heat-sealing, the adjacent sheet segments 41 are brought together with the non-foamed layers 411 abutting against each other at the connection ends 410 thereof, and the connection ends 410 are heat-sealed to each other. After heat-sealing, heat-sealed seams 42 are formed in the sporting article. The heat-sealing may be conducted at 8 0-2 60 °C for at least 3 seconds, and may be carried out through a hot-press sealing process, a high-frequency sealing process, an ultrasonic sealing process, or an optical heat source sealing process such as a laser sealing process.

With the method of the embodiment, the sporting article comprises a plurality of sheet segments 4 1 and heat-sealed seams 42 where the sheet segments 41 are interconnected. The sporting articles produced according to the present invention may be protective devices (for example, chest protectors, arm pads, shoulder pads, shin guards, etc.), gloves (for example, batting gloves, catcher's gloves, etc.), soccer balls, basketballs, and so on.

Because both of the foamed and non-foamed layers of the sheet segments are made from plastic, i.e. TPU, it is not necessary to separate the two layers when recycling the sporting article. Furthermore, since the two layers are bonded to each other by melt bonding, no adhesive is needed in making the sporting article.

In addition, since assembling of the sheet segments 41 is conducted by heat-sealing the connection ends 410 thereof, and since the area of the interface of the sheet segments 41 at each heat-sealed seams 42 is relatively larger than that of the interface at each stitch seam in the prior art, a higher bonding strength can be achieved in the sporting article of the present invention compared to the prior art. Therefore, the use of the heat-sealed seams 42 in place of the conventional stitch seams can solve a problem in which the sporting article is easily torn apart by pulling stresses at the stitch seams.

Furthermore, when the sporting article produced according to the present invention is torn at one of the heat-sealed seams 42, as long as the sheet segments 41 are not torn, the sporting article can be easily repaired by simply reheating and resealing the connection ends of the sheet segments 41.

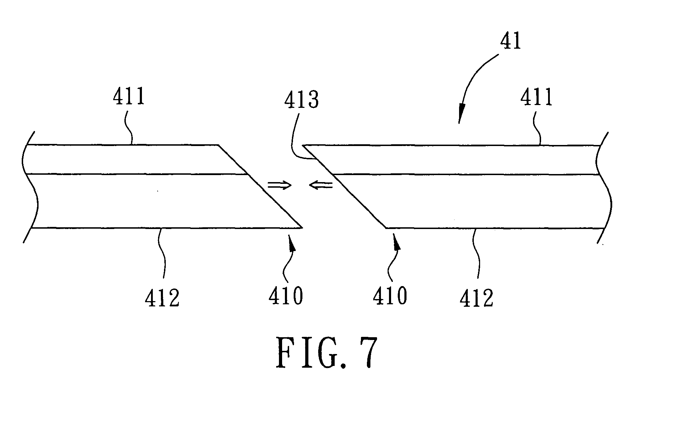

Referring to Fig. 7, according to a second preferred embodiment of the present invention, the connection ends 410 of the sheet segments 41 may be provided with beveled edge faces 413. During heat-sealing, the beveled edge faces 413 of the connection ends 410 of the sheet segments 41 are brought to abut against each other, and are thereafter melted and sealed to each other.

Since the beveled edge faces 413 of the sheet segments 41 can provide a relatively large contact surface area for heat-sealing compared to a non-beveled edge face, a high bonding strength can be achieved at the heat-sealed seams 42.

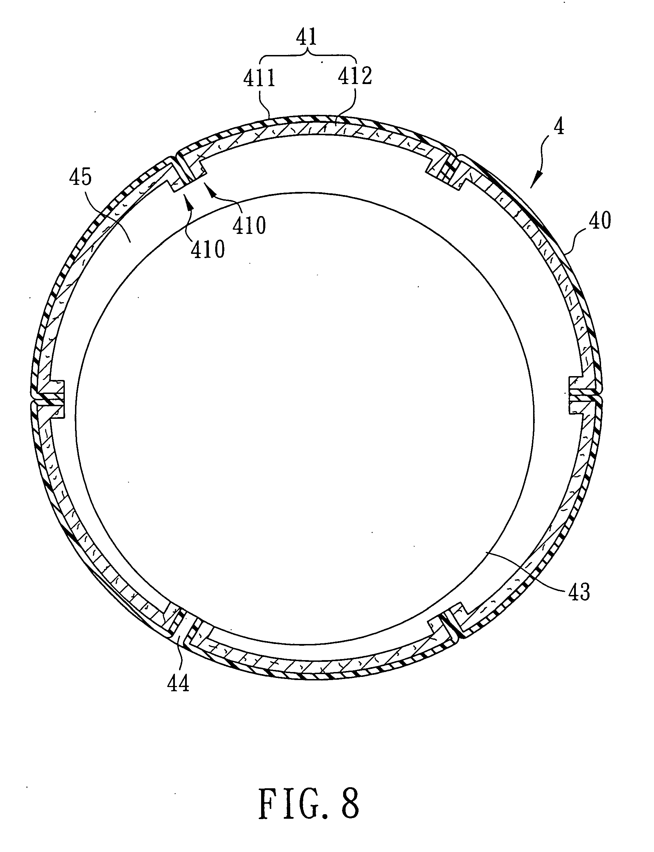

According to a third preferred embodiment of the present invention, the method of ma king a sporting article is used to make a soccer ball 4 as shown in Fig. 8. The soccer ball 4 includes an outer shell 40, and an internal component 43.

The third embodiment is used to make the outer shell 40 of the soccer ball 4. The third embodiment differs from the first embodiment in that the sheet segments 41, after being assembled, forms the outer shell 40 having a receiving space 45 surrounded by the sheet segments 41, and an inflating hole 44. The method of the third embodiment further includes the step of disposing an internal component or an air bladder 43 into the receiving space 45. The air bladder 43 is communicated with the inflating hole 44.

Optionally, the sheet segments 41 may be embossed to form an embossed pattern thereon before the sheet segments 41 are assembled.

It is worth mentioning that, when the sheet segments 41 are made from thermoplastic polyurethane (TPU), the sporting article produced therefrom is biodegradable and easy to recycle and has good shock-absorbing properties and high resistance to impact and abrasion. An environment-friendly sporting article with excellent performance can be obtained in the present invention.

## Claims

1. A method of making a sporting article, comprising:
providing a plurality of sheet segments (41) each of which is made of a multi-layered material that includes a thermoplastic foamed layer (412), and a thermoplastic non-foamed layer (411) laminated on the foamed layer (412) each of the sheet segments (41) having at least one connection end (410); and
assembling the sheet segments (41) to form the sporting article by heat-sealing the connection ends (410) of the sheet segments (41), thereby forming heat-sealed seams (42) in the sporting article.

2. The method of Claim 1, wherein the non-foamed layer (411) is made from a non-foamed thermoplastic polyurethane sheet, and the foamed layer (412) is made from a foamed thermoplastic polyurethane sheet, the non-foamed layer (411) and the foamed layer (412) being bonded to each other by melt bonding.

3. The method of Claim 1, further comprising the step of providing the connection ends (410) of at least two of said sheet segments (41) with beveled edge faces (413), abutting the beveled edge faces (413) against each other, and heat-sealing the beveled edge faces (413).

4. The method of Claim 1, further comprising the step of abutting the non-foamed layers (411) of at least two of said sheet segments (41) against each other at the connection ends (410) thereof, and heat-sealing the non-foamed layers (411) at the connection ends (410).

5. The method of Claim 1, wherein the assembling of the sheet segments provides a receiving space (45) that is surrounded by the sheet segments (41), the method further comprising the step of disposing an internal component into the receiving space (45).

6. The method of Claim 2, wherein the heat-sealing and the melt bonding are conducted at a temperature ranging from 80∼260°C.

7. The method of Claim 2, wherein the density of the foamed layer (412) ranges from 0.1 to 0.8 g/cm³.

8. The method of Claim 1, wherein the heat-sealing is carried out through one of a hot-press sealing process, a high-frequency sealing process, an ultrasonic sealing process, and an optical heat source sealing process.

9. A sporting article made according to the method of Claim 1, comprising: a plurality of sheet segments (41) made of a multi-layered material that includes a thermoplastic foamed layer (412) , and a thermoplastic non-foamed layer (411) laminated on said foamed layer (412); and heat-sealed seams (42) where said sheet segments (41) are interconnected to form said sporting article.

10. The sporting article of Claim 9, which has no stitch seams.

11. The sporting article of Claim 9, wherein said non-foamed layer (411) is made from a non-foamed thermoplastic polyurethane sheet, and said foamed layer (412) is made from a foamed thermoplastic polyurethane sheet, said non-foamed layer (411) being melt bonded to said foamed layer (412).

12. The sporting article of Claim 9, further comprising a receiving space (45) surrounded by said sheet segments (41), an internal component received in said receiving space (45), and an inflating hole (44) in fluid communication with said internal component.

13. The sporting article of Claim 9, wherein said foamed layer (412) has a density ranging from 0.1 to 0.8 g/cm³.

14. The sporting article of Claim 12, wherein said internal component is an air bladder (43).
